# EUROPEAN PATENT SPECIFICATION

(11) **EP 2 613 626 B1**
(45) Date of publication and mention of the grant of the patent: **03.12.2014**
(21) Application number: 11757429.3
(22) Date of filing: 05.09.2011
(51) Int. Cl.: A01K 5/02

(54) **SYSTEM FOR FEEDING ANIMALS SUCH AS PIGS**
SYSTEM ZUR FÜTTERUNG VON TIEREN WIE ETWA SCHWEINEN
SYSTÈME D'ALIMENTATION D'ANIMAUX TELS QUE DES PORCS

(30) Priority: 07.09.2010 NL 2005324
(43) Date of publication of application: 17.07.2013
(73) Proprietor: N.V. Nederlandsche Apparatenfabriek NEDAP, 7141 DC Groenlo (NL)
(72) Inventor: KUIPERS, Jan Anne, NL-7241 VP Lochem (NL)
(74) Representative: Jansen, Cornelis Marinus
(86) International application number: PCT/NL2011/050607
(87) International publication number: WO 2012/033404

(56) References cited:
- WO-A1-00/13499
- WO-A1-92/08344

## Description

The invention relates to a system for feeding animals such as pigs, provided with a trough for containing food, a supply unit for supplying portions of food into the trough, identification means for identifying an animal that approaches the trough for eating food from the trough and a control unit connected to the supply unit and the identification means for controlling the supply unit in response to signals generated by the identification means wherein based on the determined identity of the animal the control unit determines the total amount of food which is to be supplied in the form of subsequent portions of food into the trough for feeding the animal..

Such a system is known as such. The known system generally works as follows. If an animal approaches the trough for eating food, the animal is identified by the identification means. For this purpose usually the animal has been provided with a tag, such as an eartag provided with a transponder.

The identification means generate for example an electromagnetic field upon which the tag responses by transmitting an identification code. This identification code is received by the identification means. The identification means generates a signal comprising information about the identification code for the animal. This signal is submitted to the control unit, for example by means of a wire. The control unit for example comprises a memory means wherein amongst others the identification codes of animals are stored. Associated with each identification code an amount of food is stored which should be submitted to the particular animal. If the control unit receives the identification code from the identification means the control unit determines, based on this identification code, the quantity of food the animal which approaches the trough should receive. This amount of food is provided to the animal in subsequent portions of food. In the known system these subsequent portions of food are provided on a regular time basis until the determined total amount of food is provided to the animal. For example, one portion of food is provided into the trough per minute by means of the supply unit under the control of the control unit until the animal has been provided his total amount of food.

A disadvantage of the known system is that the regular timing pattern according to which the portions of food are submitted into the trough, do not match the rate at which the animal eats his food. This may lead to a spoiling of food if the animal cannot, and therefore will not eat a complete portion of food before the next portion of food is submitted into the trough. In that case there may be an overflow of food out of the trough or the food becomes available to another animal. It may also lead to a lowering of the capacity of the system for feeding animals because it may also happen that if the animal has completely eaten a portion of food has to wait relatively long before the next portion of food is supplied by the supply means into the trough . It may happen that the animal, after having eaten his portions of food has to wait too long for his subsequent portion of food so that the animal leaves the trough and will not eat his next portion(s) of food at all. This may also result in agitation between the animals.

It has been proposed to determine the speed at which an individual animal eats his food in advance and store this information in the control unit. In this manner, after the animal has been identified, the animal obtains his food in portions at a rate which should correspond with the rate wherein the animal eats his food. However, the same problem remains, because the rate at which the animal eats his food appears to vary in time. It may vary on a day by day basis and it may even vary while the animal is eating. Thus, the same problems remain as discussed above.
It is an object of the invention to provide a solution to these problems.

The system according to the invention is characterized in that the system is further provided with a sensor which is arranged such that it can be actuated by the animal while the animal is eating food from the trough and wherein the system is arranged such that the control unit will control the supply unit for supplying a next portion of food into the trough if at least the following conditions are met after that the previous portion of food was supplied into the trough: the same animal has been identified which was identified for supplying the previous portion of food into the trough and this animal has been actuating the sensor.

Because, according to the invention, a next portion of food is submitted depending on the event of the animal having actuated the sensor, the animal will learn that it must activate the sensor for obtaining his next portion of food. Hence, the supply of the portions of food is regulated based on an actual demand of the specific animal. In this way it is possible that the acual rate of eating and the rate of providing subsequent portions of food to the animal, are perfectly matched to each other.

It is also avoided that the animal which is eating is chased away by another animal because if this would happen, the other animal would not obtain the next portion of food because the identification means will not identify the animal which was originally provided with food. This means that the animal which has chased away the other animal is not rewarded by obtaining food.

Preferably the system may be arranged such that if another animal is identified while all portions of food which should be provided to the previously identified animal, have not been submitted yet to the trough, the supply of these portions of food to the trough is stopped, thereby preventing that an other animal eats portions of food which are intended to be eaten by the previously identified animal. Because the other animal will learn that he will not obtain food if he chases away an animal which is eating, the other animal will not be inclined anymore to chase away an animal which is eating. Of course this is true for each animal which is fed by the system, so that the whole collection of animals which are fed by a system according to the invention, will become more calm when they are fed.

Preferably, the system is arranged such that if, on a certain moment in time, a second animal is identified which is different from a first animal which first animal was identified for the previous portion of food submitted by the supply unit into the trough while on this moment in time the total amount of food which should be provided to the first animal is not submitted yet into the trough, the system will not provide a next portion of food into the trough for the first animal (because the first animal is probably chased away by the second animal) and the system will not provide a first portion of food into the trough for the second animal (because the second animal should not be rewarded for his chasing behaviour) during a fith time period which runs from the certain moment in time.
This fifth time period may for example lie within the time interval of 5-60 sec. and/or depend on the identity of the second animal. Hence, the second animal knows that if he chases away an animal which is eating, he will not be rewarded by obtaining his food soon and the animal is punished because it has to wait at least for a time period as long as the fifth time period before it can obtain its food. Therefore all the animals will learn not to chase away animals so that the cattle of animals will behave more calm.

There are several other preferred embodiments according to the invention. Preferably the system is characterized in that the system is arranged such that the next portion of food is supplied after that a first predetermined minimum time period has expired following the moment in time wherein the animal actuated the sensor which actuation resulted in meeting the at least two conditions for supplying the next portion of food. Thus there is a delay between actuation of the sensor and supplying a next portion of food.

In this manner it is made absolutely sure that the animal which is actuating the sensor, is also the animal which is identified by the system. However it is also possible that identifying the animal occurs slightly after that an animal actuated the sensor. This may for example be the case if the animal is identified in response to an actuation of the sensor. It is also possible that the system is arranged such that the control unit will control the supply unit for supplying the next portion of food into the trough if at least the following conditions are met after that the previous portion of food was supplied into the trough: the same animal has been identified which was identified for supplying the previous portion of food into the trough and this animal was identified the last time before the sensor was actuated or within a certain predetermined time period before the sensor was actuated. According to a preferred embodiment, the system is arranged such that the next portion of food is supplied directly after that the animal has actuated the sensor (provided that also the at least two conditions are met). This means that the animal learns that directly after that he actuates the sensor, he will obtain his next portion of food. However it is also possible that the system is arranged such that the next portion of food is supplied after that a predetermined first time period has expired since the animal has actuated the sensor. Thus it may be that the next portion of food is submitted, for example, five seconds after that the animal has actuated the sensor. Of course, in that situation, also the other condition must be met, namely that the same animal has been identified which was identified for supplying the previous portion of food.

According to a preferred embodiment, the system is arranged such that the next portion of food is only supplied after that a predetermined third minimum time period has expired since the previous portion was supplied into the trough and if after the predetermined third minimum time period the following at least two conditions are met: the same animal has been identified which was identified for supplying the previous portion of food into the trough and this animal has been actuating the sensor. Thus the system is arranged such that subsequent portions of food are not provided to the animal within subsequent time periods which are shorter than the predetermined minimum third time period. Thereby it is prevented that if the animal would actuate the sensor many times within a short time period, many portions will be supplied to the trough into such a short time period. Thereby it is avoided that the trough will become overloaded. Accordingly it is also possible that the system is arranged such that the the next portion of food is only supplied into the trough if the following condition is also met: the same animal has been identified which was identified for supplying the previous portion of food into the trough and this animal has been actuating the sensor after that a predetermined fourth minimum time period has expired since the moment in time wherein the animal actuated the sensor which actuation resulted in the supply of the previous portion of food. Also according to this embodiment it is prevented that too many portions of food are supplied within a certain short time period if the animal would actuate the sensor with a relatively fast rate.

The invention will now be explained on the basis of the drawings. In the drawings:
Fig. 1 shows a first embodiment of the system according to the invention; and
Fig. 2 shows a second embodiment of the system according to the invention.
Fig. 3 shows a third embodiment of the system according to the invention.

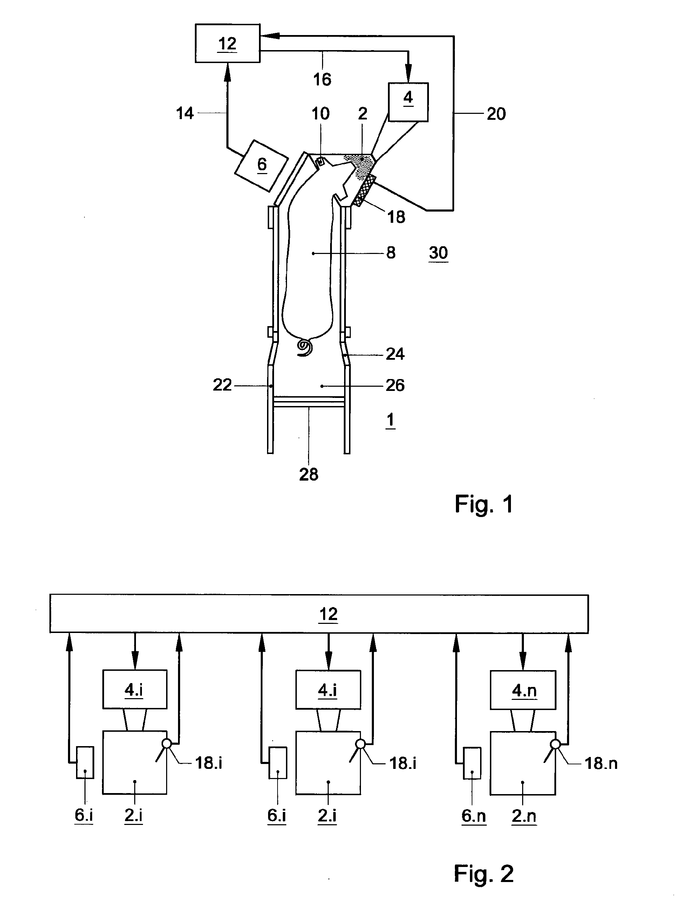

In figure 1 reference number 1 refers to a system according to the invention. The system 1 is provided with a trough 2 for containing food. The system is further provided with a supply unit 4 which is known as such for supplying portions of food into the trough. Furthermore the system is provided with identification means 6 for identifying a first animal 8. In this example the animal is wearing an eartag 10 which can be read out by means of the identification means 6 in a well known manner. The eartag may for example be provided with a well-known passive responder wherein the identification means is for example arranged for submitting an electromagnetic field. If the eartag becomes in the electromagnetic field, the eartag responds by submitting an identification code which is received by the identification means.

The system is further provided with a control unit 12 which is connected to the identification means by means of a lead 6 and which is connected to the supply unit 4 by means of a lead 16.

The system is further provided with a sensor 18 which is connected to the control unit by means of a lead 20. In this embodiment, the sensor 18 is provided with a well-known clapper which may be actuated by the animals' head. The sensor 18 is arranged such that it can be actuated by the animal while the animal is eating food from the trough. In this example the sensor 18 is situated in the trough so that the animal can actuate the sensor by contacting the sensor with its head.

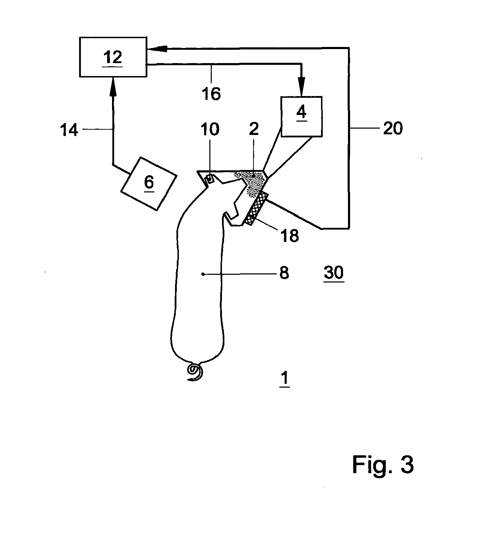

Although not essential to the invention, the system is further provided with two fences 22, 24 providing a path-way 26 there between towards the trough 2. These fences and gate may be omitted, such as shown in fig. 3. Due to the fences in figure 1 it holds that the system is provided with fences defining a pathway along which one animal can walk towards the trough and reach the trough at the same time. The path-way 26 can be opened and closed by means of a gate 28.

The embodiment as described above functions as follows. An animal which wants to get its food walks to the gate 28 which can be opened by the animal, simply by pushing it open. Then the animal walks via the path-way 26 towards the trough 2. If the animal reaches the trough the identification means 6 will read the identification code from the eartag 10 from the animal because in this embodiment the identification means is constantly or regularly submitting the electromagnetic field until an animal is identified. After identifying an animal, the identification means may continue operating in the same manner or it may stop.

The identification code which is read out by the identification means is submitted to the control unit 12 via the lead 14. The control unit 12 in this example comprises information about identification codes of several animals. These identification codes are stored in the control unit 12 in association with specific total amounts of food which should be supplied to an individual animal if the animal is fed. These total amounts of food can, for example, be expressed in weight or volume. Hence, on the basis of the identification code which is submitted via the lead to the supply unit, the supply unit determines how much food the identified animal should be provided at this time. In this example the supply unit also contains information about in how many portions the total amount of food should be supplied to the animal. Alternatively it may contain information about the weight or volume of an individual portion of food which should be supplied to the animal so that the number of portions which sum up to the total amount of food, can be determined. Once the animal is identified as discussed above and it is determined how many portions of food the animal should obtain, as well as the volume and/or weight of such portions, the control unit controls the supply unit for providing a first portion of the food into the trough 2. Then the animal starts eating his first portion of food. The sensor 18, as explained, can be actuated by the animals' head while it is eating. If the animal has eaten his first portion of food, the animal will actuate the sensor 18. The fact that the animal has actuated the sensor 18 is transmitted via de lead 20 to the control unit 12.

If it is now assumed that the identification means is still continiously transmitting the electromagnetic field. In that case the following occurs. If the control unit 12 detects that the sensor 18 is actuated, the control unit 12 checks whether by means of the identification means 6 the same animal is identified for which the previous portion of food was supplied. If this condition is met, the control unit 12 controls the supply unit 4 for submitting a next portion of food to the animal.

Thus in this embodiment it is checked whether the same animal has been identified which was identified for supplying the previous portion of food into the trough and this animal has been actuating the sensor at the same moment in time wherein the animal was identified. Thus is holds that the system is arranged such that the control unit will control the supply unit for supplying the next portion of food into the trough if at least the following conditions are met after that the previous portion of food was supplied into the trough: the same animal has been identified which was identified for supplying the previous portion of food into the trough and this animal has been actuating the sensor at the same moment in time wherein the animal was identified.

If it is assumed that the identification means was stopped when the animal was identified for obtaining his first portion of food, the control unit may activate the identification means when the sensor 18 is actuated for identifying the animal which has actuated the sensor. Activation does occur at the same moment in time on which the sensor was actuated or slightly later. The identification code which is determined is submitted to the control unit. Then the control unit 12 checks whether by means of the identification means 6 the same animal is identified for which the previous portion of food was supplied. If this condition is met, the control unit 12 controls the supply unit 4 for submitting a next portion of food to the animal. Thus is now holds that the system is arranged such that the control unit will control the supply unit for supplying the next portion of food into the trough if at least the following conditions are met after that the previous portion of food was supplied into the trough: the same animal has been identified which was identified for supplying the previous portion of food into the trough and this animal has been actuating the sensor at the same moment in time (including slightly earlier) wherein the animal was identified.

If it is assumed that the identification means transmits regularly an electromagnetic field, for example every five seconds, it is checked whether the same animal was identified by means of the identification means just before the sensor was actuated by an animal, for example the identification means may every five seconds determine and submit an identification code to the control unit wherein the control unit upon detecting that the sensor 18 was actuated by an animal, checks on the basis of the last submitted identification code whether this identification code corresponds with the identification code of an animal which was used for supplying the previous portion of food. Hence, in that case it holds that the system is arranged such that the control unit will control the supply unit for supplying the next portion of food into the trough if at least the following conditions are met after that the previous portion of food was supplied into the trough: the same animal has been identified which was identified for supplying the previous portion of food into the trough and this animal was identified the last time before the sensor was actuated or within a certain predetermined time period (in this example 5 seconds) before the sensor was activated.

However, in this case it is further assumed that the identification means continiously transmits the electromagnetic field. the system works according to the embodiment as previously discussed, meaning that the system is arranged such that the control unit will control the supply unit for supplying the next portion of food into the trough if at least the following conditions are met after that the previous portion of food was supplied into the trough: the same animal has been identified which was identified for supplying the previous portion of food into the trough and this animal has been actuating the sensor at the same moment in time wherein the animal was identified. Thus in this case, if the animal actuates the sensor it is checked whether the same animal actuates the sensor for which a previous portion of food was submitted to the trough. If this condition is met, the control unit 12 controls the supply unit 4 so that a next portion of food is submitted to the trough. In this example the system is arranged such that this next portion of food is supplied directly after that the animal has actuated the sensor and the other conditions are met such as discussed hereabove. Thus if the animal actuates the sensor, and it is checked that this is the same animal for which the previous portion of food was submitted into the trough, the system is arranged such that directly after that the animal has actuated the sensor, the next portion of food is supplied into the trough.

It is however also possible that the next portion of food is supplied after that a predetermined first time period has expired following the moment on which the animal has actuated the sensor. The length of this first time period may lie within an interval of 1-10 seconds, preferably within an interval of 1-5 seconds.

In a specific embodiment the system is arranged such that a next portion of food is only supplied after that a predetermined minimum second time period has expired since the previous portion of food was supplied into the trough. Thereby it is avoided that if, for example, the animal actuates the sensor twice within a relative short time period the animal obtains two portions of food within the duration of the minimum second time period. The system may wait until the second minimum time period has expired before supplying the next portion of food. This second time period may overrule the expiration of the first minimum time period. Both time periods may have to be expired before the next portion of food can be supplied, In other words, in response to an actuation of the sensor following shortly after the previous actuation of the sensor the supply of the next portion of food is delayed by the system. Thereby it is avoided that too many portions of food are supplied too quickly after one another.

In a first preferred embodiment the system is arranged such that the next portion of food is only supplied after that a predetermined third minimum time period has expired since the previous portion was supplied into the trough and if after the predetermined third minimum time period the following at least two conditions are met: the same animal has been identified which was identified for supplying the previous portion of food into the trough and this animal has been actuating the sensor. This means that if the sensor is actuated before the third minimum time period has expired, a next portion of food will never be supplied in response to this actuation of the sensor (cancellation instead of delay). Only if the sensor is actuatedn after that the third minimum time period has expired, a next portion of food can be supplied in response to such actuation of the sensor. Thereby it is also avoided that too many portions of food are supplied too quickly after one another. The predetermined third minimum time period as well as said predetermined second minimum time period may lie within an interval of 1-180 seconds, preferably within an interval of 15-60 seconds and/or may depend on the indentification code of the animal. In this case, the third minimum time period is about 30 seconds.

Alternatively to the first preferred embodiment, the system may be arranged such that the the next portion of food is only supplied into the trough if the following condition is also met: the same animal has been identified which was identified for supplying the previous portion of food into the trough and this animal has been actuating the sensor after that a predetermined fourth minimum time period has expired since the moment in time wherein the animal actuated the sensor which actuation resulted in the supply of the previous portion of food. Also according to this embodiment it is also avoided that the portions of food are submitted too quickly after each other if the animal should actuate the sensor at a too fast rate. In this case if a predetermined fourth minimum time period has not expired since the animal has actuated the sensor, which actuating resulted in a supply of the previous portion of food, no next portion of food will be supplied at all in response to this latest actuation (cancellation instead of delay). The predetermined fourth minimum time period may, for example, have a length which lies within an interval of 1-180 sec, preferably within an interval of 15-60 sec and/or depends on the identification code of the animal.

If another animal would approach the trough 2, for example, from a position 30 indicated in fig 3 (this is a third embodiment corresponding with the first embodiment of figure 1 wherein the fences 22, 24 are omitted. In figures 1 and 3 corresponding parts have the same reference number. This means that the system is arranged such that a plurality of animals can walk towards the trough at the same time and this second animal tries to chase away the first animal 8 and subsequently the second animal 32, would approach the trough via the path-way 26 the system is arranged such that this second animal will not obtain his food in case the first animal has not abtained his total amount of food yet. More particularly, the system is arranged such that if on a certain moment in time a second animal is identified which is different from a first animal which first animal was identified for the previous portion of food submitted by the supply unit into the trough, while on this moment in time the total amount of food which should be provided to the first animal is not submitted yet into the trough, the system will not provide a next portion of food into the trough for the first animal and the system will not provide a first portion of food into the trough for the second animal during a predetermined fifth minimum time period which runs from the certain moment in time. Thus if the second animal approaches the trough, the identification means detects the identification code of the second animal. This identification code is submitted to the control unit 12. The control unit 12 detects that another animal is present near the trough and that this is not the animal which was obtaining subsequent portions of food for receiving a total amount of food wherein the total amount of food was not submitted into the trough yet for the first animal. In that case, the supply unit will not provide a next portion of food to the first animal or a first portion of food to the second animal. This will be the case during a fifth time period which runs from the moment on which in this example the second animal is identified for the first time. This fifth time period may have a length which lays within a time interval of 5-720 seconds, preferable within a time interval of 5-60 seconds and/or may depend on the identification code of the second animal. In this example the interval is 50 seconds. So the animal learns that if he chases away an animal, he will not obtain his food within 50 seconds. Hence, the second animal will refrain from chasing a first animal, while the first animal is eating.

As explained above, if the first animal has approached the trough 2, the animal is identified resulting in that the animal obtains his first portion of food. The system may be arranged such that the first portion of food is submitted without that the animal has to actuate the sensor. In that case, only for the second and further portions of the food the animal has to actuate a sensor. It is however also possible that also for the first portion of food the animal needs to be identified as well as actuating the sensor. Such varieties all fall within the scope of the invention.

In figure 2 a second embodiment of the invention is disclosed. Basically the system comprises a plurality of troughs 2.i (i=1-n), identification means 6.i, supply units 4.i and sensor units 18.i (i=1, 2, n). It further comprises a common control unit 12. Each combination i of a supply unit 4.i, an identification means 6.i, a trough 2.i and sensor 18.i works the same as discussed in relation to figure 1 in combination with the common control unit 12. In this embodiment the troughs 2.i can be approached directly by an animal without having to walk through a path-way 26 because the fences 22, 24 are not present. Such varieties also fall within the scope of the invention. In this example the sensor 18 and the sensors 18.i are each provided with a well-known clapper wherein the control unit 12 in figure 1 and figure 2 detects when the clapper is actuated by the animal. The sensor may however also be provided with a pressure sensitive sensor which generates a signal once the sensor is pressed upon by the animals' head. It is also possible that the sensor comprises a capacitive sensor or resistance sensitive sensor which detects when the animal contacts the sensor. In that case the sensor may be provided with a flat sensor surface in the form of a flat plate. It is also possible that control unit 12 is provided with a first sub-unit which is located near the trough and a second sub-unit which is located elsewhere. In that case the information of the identification codes, the associated information of the amounts of food, the number of portions of food, the value of the time periods etc. may be stored in the second sub-unit wherein the first sub-unit controls the supply unit and receives information from the second sub-unit and the identification means for carrying out such control. Also such varieties fall within the scope of the invention.

## Claims

1. System for feeding animals such as pigs, provided with a trough for containing food, a supply unit for supplying portions of food into the trough, identification means for identifying an animal that approaches the trough for eating food from the trough and a control unit connected to the supply unit and the identification means for controlling the supply unit in response to signals generated by the identification means wherein based on the determined identity of the animal the control unit determines the total amount of food which is to be supplied in the form of subsequent portions of food into the trough for feeding the animal, **characterised in that** the system is further provided with a sensor which is arranged such that it can be actuated by the animal while the animal is eating food from the trough and wherein the system is arranged such that the control unit will control the supply unit for supplying a next portion of food into the trough if at least the following conditions are met after that the previous portion of food was supplied into the trough: the same animal has been identified which was identified for supplying the previous portion of food into the trough and this animal has been actuating the sensor.

2. System according to claim 1, **characterised in that** the system is arranged such that the control unit will control the supply unit for supplying the next portion of food into the trough if at least the following conditions are met after that the previous portion of food was supplied into the trough: the same animal has been identified which was identified for supplying the previous portion of food into the trough and this animal has been actuating the sensor at the same moment in time wherein the animal was identified.

3. System according to claim 1, **characterised in that** the system is arranged such that the control unit will control the supply unit for supplying the next portion of food into the trough if at least the following conditions are met after that the previous portion of food was supplied into the trough: the same animal has been identified which was identified for supplying the previous portion of food into the trough and this animal was identified the last time before the sensor was actuated or within a certain predermined time period before the sensor was actuated.

4. System according to claim 1,2 or 3, **characterised in that** the system is arranged such that the next portion of food is supplied after that a first predetermined minimum time period has expired following the moment in time wherein the animal actuated the sensor which actuation resulted in meeting the at least two conditions for supplying the next portion of food.

5. System according to claim 1,2, 3 or 4, **characterised in that** the system is arranged such that the next portion of food is supplied directly after the moment in time wherein the animal actuated the sensor which actuation resulted in meeting the at least two conditions for supplying the next portion of food.

6. System according to claim 1,2,3 or 4, **characterised in that**, the system is arranged such that the next portion of food is only supplied after that a predetermined second minimum time period has expired since the previous portion was supplied into the trough.

7. System according to any preceding claim, **characterised in that**, the system is arranged such that the next portion of food is only supplied after that a predetermined third minimum time period has expired since the previous portion was supplied into the trough and if after the predetermined third minimum time period the following at least two conditions are met: the same animal has been identified which was identified for supplying the previous portion of food into the trough and this animal has been actuating the sensor.

8. System according to any preceding claim, **characterised in that**, the system is arranged such that the next portion of food is only supplied into the trough if the following condition is also met: the same animal has been identified which was identified for supplying the previous portion of food into the trough and this animal has been actuating the sensor after that a predetermined fourth minimum time period has expired since the moment in time wherein the animal actuated the sensor which actuation resulted in the supply of the previous portion of food.

9. System according to any preceding claims, **characterised in that**, the system is arranged such that if on a certain moment in time a second animal is identified which is different from a first animal which first animal was identified for the previous portion of food submitted by the supplyunit into the throuh while on this moment in time the total amount of food which should be provided to the first animal is not submitted yet into the trough, the system will not provide a next portion of food into the trough for the first animal and the system will not provide a first portion of food into the trough for the second animal during a predetermined fith minimum time period which runs from the certain moment in time.

10. System acoording to any preceding claims, **characterised in that** the sensor is connected to the control unit.

11. System according to any preceding claim, **characterised in that** the sensor is provided with a clapper, a pressure sensitive sensor, a capasitive sensitive sensor or a resistance sensitive sensor.

12. System according to claim 4, **characterised in that** the predetermined first minimum time period has a length which lays within an interval of 1-10 sec, preferably within an interval of 1-5 sec.

13. System according to claim 6, **characterised in that** the predetermined second minimum time period has a length which lays within an interval of 1-180 sec, preferably within an interval of 15-60 sec and/or depends on the identity of the animal.

14. System according to claim 7, **characterised in that** the predetermined third minimum time period has a length which lays within an interval of 1-180 sec, preferably within an interval of 15-60 sec and/or depends on the identity of the animal.

15. System according to claim 8, **characterised in that** the predetermined fourth minimum time periodhas a length which lays within an interval of 1-180 sec, preferably within an interval of 15-60 sec and/or depends on the identity of the animal.

16. System according to claim 9, **characterised in that** the predetermined fith minimum time period has a length which lays within an interval of 5 sec-720 sec, preferably within an interval of 5-60 sec and/or depends on the identity of the second animal.

17. System according to any preceding claim, **characterized in that**, the system is provided with fences defining a pathway along which one animal can walk towards the trough and reach the trough at the same time.

18. System according to any preceding claim 1-16, **characterized in that** the system is arranged such that a plurality of animals can walk towards the trough at the same time

## Patentansprüche

1. System zur Fütterung von Tieren wie etwa Schweinen, umfassend einen Trog zum Aufnehmen von Futter, eine Zufuhreinheit zum Zuführen von Futterportionen in den Trog, Identifikationsmitteln zum Identifizieren eines Tieres, das sich dem Trog nähert, um Futter aus dem Trog zu fressen, und eine Steuereinheit, verbunden mit der Zufuhreinheit, und den Identifikationsmitteln zum Steuern der Zufuhreinheit in Reaktion auf Signale, erzeugt von den Identifikationsmitteln, wobei die Steuereinheit basierend auf der ermittelten Identität des Tieres die Gesamtmenge an Futter bestimmt, die in Form von aufeinanderfolgenden Futterportionen dem Trog zum Füttern des Tieres zugeführt werden soll, **dadurch gekennzeichnet, dass** das System ferner mit einem Sensor versehen ist, der so angeordnet ist, dass er vom Tier ausgelöst werden kann, während das Tier Futter aus dem Trog frisst, und wobei das System so angeordnet ist, dass die Steuereinheit die Zufuhreinheit zum Zuführen der nächsten Futterportion in den Trog steuert, wenn mindestens die folgenden Bedingungen erfüllt sind, nachdem die vorhergehende Futterportion dem Trog zugeführt wurde: Es wurde dasselbe Tier identifiziert, das zum Zuführen der vorhergehenden Futterportion identifiziert wurde, und dieses Tier hat den Sensor ausgelöst.

2. System nach Anspruch 1, **dadurch gekennzeichnet, dass** das System so angeordnet ist, dass die Steuereinheit die Zufuhreinheit zum Zuführen der nächsten Futterportion in den Trog steuert, wenn mindestens die folgenden Bedingungen erfüllt sind, nachdem die vorhergehende Futterportion dem Trog zugeführt wurde: Es wurde dasselbe Tier identifiziert, das zum Zuführen der vorhergehenden Futterportion identifiziert wurde, und dieses Tier hat den Sensor zu demselben Zeitpunkt ausgelöst, an dem das Tier identifiziert wurde.

3. System nach Anspruch 1, **dadurch gekennzeichnet, dass** das System so angeordnet ist, dass die Steuereinheit die Zufuhreinheit zum Zuführen der nächsten Futterportion in den Trog steuert, wenn mindestens die folgenden Bedingungen erfüllt sind, nachdem die vorhergehende Futterportion dem Trog zugeführt wurde: es wurde dasselbe Tier identifiziert, das zum Zuführen der vorhergehenden Futterportion identifiziert wurde, und dieses Tier wurde letztmals bevor der Sensor ausgelöst wurde oder innerhalb eines vorbestimmten Zeitraums bevor der Sensor ausgelöst wurde identifiziert.

4. System nach Anspruch 1, 2 oder 3, **dadurch gekennzeichnet, dass** das System so angeordnet ist, dass die nächste Futterportion zugeführt wird, nachdem ein erster vorbestimmter Mindestzeitraum nach dem Zeitpunkt, in dem das Tier den Sensor ausgelöst hat, verstrichen ist, wobei das Auslösen in der Erfüllung der mindestens zwei Bedingungen zum Zuführen der nächsten Futterportion resultierte.

5. System nach Anspruch 1, 2, 3 oder 4, **dadurch gekennzeichnet, dass** das System so angeordnet ist, dass die nächste Futterportion direkt nach dem Zeitpunkt zugeführt wird, in dem das Tier den Sensor ausgelöst hat, wobei das Auslösen in der Erfüllung der mindestens zwei Bedingungen zum Zuführen der nächsten Futterportion resultierte.

6. System nach Anspruch 1, 2, 3 oder 4, **dadurch gekennzeichnet, dass** das System so angeordnet ist, dass die nächste Futterportion nur zugeführt wird, nachdem ein vorbestimmter zweiter Mindestzeitraum seit dem Zuführen der vorhergehenden Futterportion in den Trog verstrichen ist.

7. System nach einem der vorhergehenden Ansprüche, **dadurch gekennzeichnet, dass** das System so angeordnet ist, dass die nächste Futterportion nur zugeführt wird, nachdem ein vorbestimmter dritter Mindestzeitraum seit dem Zuführen der vorhergehenden Futterportion in den Trog verstrichen ist und wenn nach dem vorbestimmten dritten Mindestzeitraum die folgenden mindestens zwei Bedingungen erfüllt sind: es wurde dasselbe Tier identifiziert, das zum Zuführen der vorhergehenden Futterportion in den Trog identifiziert wurde, und dieses Tier hat den Sensor ausgelöst.

8. System nach einem der vorhergehenden Ansprüche, **dadurch gekennzeichnet, dass** das System so angeordnet ist, dass die nächste Futterportion dem Trog nur zugeführt wird, wenn die folgende Bedingung ebenfalls erfüllt ist: es wurde dasselbe Tier identifiziert, das zum Zuführen der vorhergehenden Futterportion in den Trog identifiziert wurde, und dieses Tier hat den Sensor ausgelöst, nachdem ein vorbestimmter vierter Mindestzeitraum seit dem Zeitpunkt, an dem das Tier den Sensor ausgelöst hat, verstrichen ist, wobei das Auslösen in der Zufuhr der vorhergehenden Futterportion resultierte.

9. System nach einem der vorhergehenden Ansprüche, **dadurch gekennzeichnet, dass** das System so angeordnet ist, dass, wenn zu einem bestimmten Zeitpunkt ein zweites Tier identifiziert wird, das sich von einem ersten Tier unterscheidet, welches erste Tier für die vorhergehende Futterportion, zugeführt von der Zufuhreinheit in den Trog, identifiziert wurde, während zu diesem Zeitpunkt die Gesamtmenge an Futter, die dem ersten Tier bereitgestellt werden sollte, dem Trog noch nicht zugeführt ist, das System keine nächste Futterportion für das erste Tier dem Trog zuführen wird, und das System während eines vorbestimmten fünften Mindestzeitraums, der ab dem gewissen Zeitpunkt läuft, keine erste Futterportion für das für das zweite Tier dem Trog zuführen wird.

10. System nach einem der vorhergehenden Ansprüche, **dadurch gekennzeichnet, dass** der Sensor mit der Steuereinheit verbunden ist.

11. System nach einem der vorhergehenden Ansprüche, **dadurch gekennzeichnet, dass** der Sensor mit einem Klappventil, eine druckempfindlichen Sensor, einem kapazitätsempfindlichen Sensor oder einem widerstandsempfindlichen Sensor versehen ist.

12. System nach Anspruch 4, **dadurch gekennzeichnet, dass** der vorbestimmte erste Mindestzeitraum eine Länge hat, die in einem Intervall von 1-10 Sekunden, bevorzugt in einem Intervall von 1-5 Sekunden liegt.

13. System nach Anspruch 6, **dadurch gekennzeichnet, dass** der vorbestimmte zweite Mindestzeitraum eine Länge hat, die in einem Intervall von 1-180 Sekunden, bevorzugt in einem Intervall von 15-60 Sekunden, liegt und/oder von der Identität des Tieres abhängt.

14. System nach Anspruch 7, **dadurch gekennzeichnet, dass** der vorbestimmte dritte Mindestzeitraum eine Länge hat, die in einem Intervall von 1-180 Sekunden, bevorzugt in einem Intervall von 15-60 Sekunden, liegt und/oder von der Identität des Tieres abhängt.

15. System nach Anspruch 8, **dadurch gekennzeichnet, dass** der vorbestimmte vierte Mindestzeitraum eine Länge hat, die in einem Intervall von 1-180 Sekunden, bevorzugt in einem Intervall von 15-60 Sekunden, liegt und/oder von der Identität des Tieres abhängt.

16. System nach Anspruch 9, **dadurch gekennzeichnet, dass** der vorbestimmte fünfte Mindestzeitraum eine Länge hat, die in einem Intervall von 5-720 Sekunden, bevorzugt in einem Intervall von 5-60 Sekunden, liegt und/oder von der Identität des zweiten Tieres abhängt.

17. System nach einem der vorhergehenden Ansprüche, **dadurch gekennzeichnet, dass** das System mit Zäunen versehen ist, die einen Weg definieren, entlang dem ein Tier zum Trog gehen und zugleich den Trog erreichen kann.

18. System nach einem der vorhergehenden Ansprüche 1-16, **dadurch gekennzeichnet, dass** das System so angeordnet ist, dass mehrere Tiere gleichzeitig zum Trog gehen können.

## Revendications

1. Système d'alimentation d'animaux tels que des porcs, pourvu d'un bac destiné à contenir de la nourriture, une unité d'alimentation pour introduire des portions de nourriture dans le bac, un moyen d'identification pour identifier un animal qui s'approche du bac pour manger de la nourriture dans le bac et une unité de commande connectée à l'unité d'alimentation et au moyen d'identification pour commander l'unité d'alimentation en réponse à des signaux générés par le moyen d'identification dans lequel, en se basant sur l'identité déterminée de l'animal, l'unité de commande détermine la quantité totale de nourriture qui doit être introduite sous la forme de portions consécutives de nourriture dans le bac pour nourrir l'animal, **caractérisé en ce que** le système est en outre pourvu d'un capteur qui est agencé de telle manière qu'il peut être actionné par l'animal pendant que l'animal mange de la nourriture dans le bac et dans lequel le système est agencé de telle manière que l'unité de commande commande l'unité d'alimentation pour introduire une portion suivante de nourriture dans le bac si au moins les conditions suivantes sont remplies après que la portion précédente de nourriture a été introduite dans le bac : le même animal a été identifié que celui qui a été identifié pour introduire la portion de nourriture précédente dans le bac et cet animal actionne le capteur.

2. Système selon la revendication 1, **caractérisé en ce que** le système est agencé de telle manière que l'unité de commande commande l'unité d'alimentation pour introduire la portion suivante de nourriture dans le bac si au moins les conditions suivantes sont remplies après que la portion précédente de nourriture a été introduite dans le bac : le même animal a été identifié que celui qui a été identifié pour introduire la portion de nourriture précédente dans le bac et cet animal actionne le capteur au même instant que celui où l'animal a été identifié.

3. Système selon la revendication 1, **caractérisé en ce que** le système est agencé de telle manière que l'unité de commande commande l'unité d'alimentation pour introduire la portion suivante de nourriture dans le bac si au moins les conditions suivantes sont remplies après que la portion précédente de nourriture a été introduite dans le bac : le même animal a été identifié que celui qui a été identifié pour introduire la portion de nourriture précédente dans le bac et cet animal a été identifié la dernière fois avant que le capteur ne soit actionné ou à l'intérieur d'un certain intervalle de temps prédéterminé avant que le capteur ne soit actionné.

4. Système selon la revendication 1, 2 ou 3, **caractérisé en ce que** le système est agencé de telle manière que la portion suivante de nourriture est introduite après qu'un premier intervalle de temps minimum prédéterminé a expiré après l'instant où l'animal a actionné le capteur, lequel actionnement s'est traduit par la satisfaction desdites au moins deux conditions pour introduire la portion suivante de nourriture.

5. Système selon la revendication 1, 2, 3 ou 4, **caractérisé en ce que** le système est agencé de telle manière que la portion suivante de nourriture est introduite directement après l'instant où l'animal a actionné le capteur, lequel actionnement s'est traduit par la satisfaction desdites au moins deux conditions pour introduire la portion suivante de nourriture.

6. Système selon la revendication 1, 2, 3 ou 4, **caractérisé en ce que** le système est agencé de telle manière que la portion suivante de nourriture n'est introduite qu'après qu'un deuxième intervalle de temps minimum prédéterminé se soit écoulé depuis l'introduction de la précédente portion dans le bac.

7. Système selon l'une quelconque des revendications précédentes, **caractérisé en ce que** le système est agencé de telle manière que la portion suivante de nourriture n'est introduite qu'après qu'un troisième intervalle de temps minimum prédéterminé se soit écoulé depuis l'introduction de la précédente portion dans le bac et si après le troisième intervalle de temps minimum prédéterminé au moins les deux conditions suivantes sont remplies : le même animal a été identifié que celui qui a été identifié pour introduire la portion de nourriture précédente dans le bac et cet animal actionne le capteur.

8. Système selon l'une quelconque des revendications précédentes, **caractérisé en ce que** le système est agencé de telle manière que la portion suivante de nourriture n'est introduite dans le bac que si la condition suivante est aussi remplie : le même animal a été identifié que celui qui a été identifié pour introduire la portion de nourriture précédente dans le bac et cet animal actionne le capteur après qu'un quatrième intervalle de temps minimum prédéterminé se soit écoulé depuis l'instant où l'animal a actionné le capteur, lequel actionnement a déclenché l'introduction de la portion de nourriture précédente.

9. Système selon l'une quelconque des revendications précédentes, **caractérisé en ce que** le système est agencé de telle manière que si à un certain instant, un deuxième animal est identifié qui est différent d'un premier animal, lequel premier animal a été identifié pour la précédente portion de nourriture introduite par l'unité d'alimentation dans le bac alors qu'à cet instant la quantité totale de nourriture qui doit être fournie au premier animal n'est pas encore introduite dans le bac, le système n'introduit pas une portion suivante de nourriture dans le bac pour le premier animal et le système n'introduit pas une première portion de nourriture dans le bac pour le deuxième animal pendant un cinquième intervalle de temps minimum prédéterminé qui commence audit certain instant.

10. Système selon l'une quelconque des revendications précédentes, **caractérisé en ce que** le capteur est connecté à l'unité de commande.

11. Système selon l'une quelconque des revendications précédentes, **caractérisé en ce que** le capteur est pourvu d'un clapet, d'un capteur sensible à la pression, d'un capteur sensible à la capacité ou d'un capteur sensible à la résistance.

12. Système selon la revendication 4, **caractérisé en ce que** le premier intervalle de temps minimum prédéterminé a une longueur qui varie dans un intervalle de 1 à 10 s, de préférence dans un intervalle de 1 à 5 s.

13. Système selon la revendication 6, **caractérisé en ce que** le deuxième intervalle de temps minimum prédéterminé a une longueur qui varie dans un intervalle de 1 à 180 s, de préférence dans un intervalle de 15 à 60 s et/ou qui dépend de l'identité de l'animal.

14. Système selon la revendication 7, **caractérisé en ce que** le troisième intervalle de temps minimum prédéterminé a une longueur qui varie dans un intervalle de 1 à 180 s, de préférence dans un intervalle de 15 à 60 s et/ou qui dépend de l'identité de l'animal.

15. Système selon la revendication 8, **caractérisé en ce que** le quatrième intervalle de temps minimum prédéterminé a une longueur qui varie dans un intervalle de 1 à 180 s, de préférence dans un intervalle de 15 à 60 s et/ou qui dépend de l'identité de l'animal.

16. Système selon la revendication 9, **caractérisé en ce que** le cinquième intervalle de temps minimum prédéterminé a une longueur qui varie dans un intervalle de 5 à 720 s, de préférence dans un intervalle de 5 à 60 s et/ou qui dépend de l'identité du deuxième animal.

17. Système selon l'une quelconque des revendications précédentes, **caractérisé en ce que** le système est pourvu de barrières qui définissent un chemin le long duquel un animal peut marcher vers le bac et atteindre le bac en même temps.

18. Système selon l'une quelconque des précédentes revendications 1 à 16, **caractérisé en ce que** le système est agencé de telle manière que plusieurs animaux peuvent marcher vers le bac en même temps.
